# EUROPEAN PATENT APPLICATION

(11) **EP 4 542 278 A1**
(43) Date of publication of application: **23.04.2025**
(21) Application number: 22946170.2
(22) Date of filing: 15.06.2022
(51) Int. Cl.: G02B 7/04, G02B 23/00

(54) **FOCUSING SYSTEM FOR OPTICAL INSTRUMENT**

(71) Applicant: Jiangsu Mark Optoelectronic Instrument Co., Ltd., Rugao Nantong, Jiangsu 226500 (CN)
(72) Inventor: MA, Shengli, Nantong, Jiangsu 226500 (CN)
(74) Representative: Schott, Jakob Valentin
(86) International application number: PCT/CN2022/098781
(87) International publication number: WO 2023/240473

(57) **Abstract**

A focuser comprising a first tube, a second tube comprising a bore-defining surface shaped to define a bore wherein the first tube extends into the bore, an optical element coupled to one of the first and second tubes for movement therewith, a plurality of rolling members, with at least one rolling member located in each of a plurality of slots or grooves to make contact with the outer surface of the first tube and the bore-defining surface of the second tube, wherein relative movement between the first and second tubes is facilitated by rolling movement in a longitudinal direction of the rolling members, in their respective slots or grooves, along the outer surface of the first tube and the bore-defining surface of the second tube.

## Description

### TECHNICAL FIELD

The present invention relates to the field of optical instruments, such as telescopes and/or the like. Some aspects of the invention provide a focusing system for an optical instrument, such as a telescope and/or the like.

### BACKGROUND

The focusing system of a telescope usually includes two tubular parts of different diameters set together (typically substantially coaxially) in which light passes through the inner (smaller diameter) tube. One of the tubular parts, typically fixed to the main structure (base) of the telescope, is commonly referred to as a fixed tube; the other tubular part, which can move along the common axial direction of the two tubular parts, is commonly referred to as a moving tube.

The moving tube may comprise, support and/or house a number of optical components, such as, by way of non-limiting example, one or more lenses, one or more mirrors, etc. The moving tube may also comprise, support and/or house optical equipment, such as, by way of non-limiting example, image-capture devices and/or the like. With the movement of the moving tube, the position of the optical element and/or optical equipment in the optical path changes accordingly, thus achieving focus adjustment.

In some focusing systems, the fixed tube may have a diameter smaller than that of the moving tube, in which case the fixed tube may be referred to as the inner tube and the moving tube may be referred to as the outer tube. In some other focusing systems, the fixed tube may have a diameter larger than that of the moving tube, in which case the fixed tube may be referred to as the outer tube and the moving tube may be referred to as the inner tube. In either case, there is typically a clearance gap between the fixed tube and the moving tube (e.g. a circumferential or annularly cross-sectional shaped gap between an outer circumferential surface of the inner tube and the inner circumferential surface of the outer tube) to allow for relative movement between the moving tube and the fixed tube.

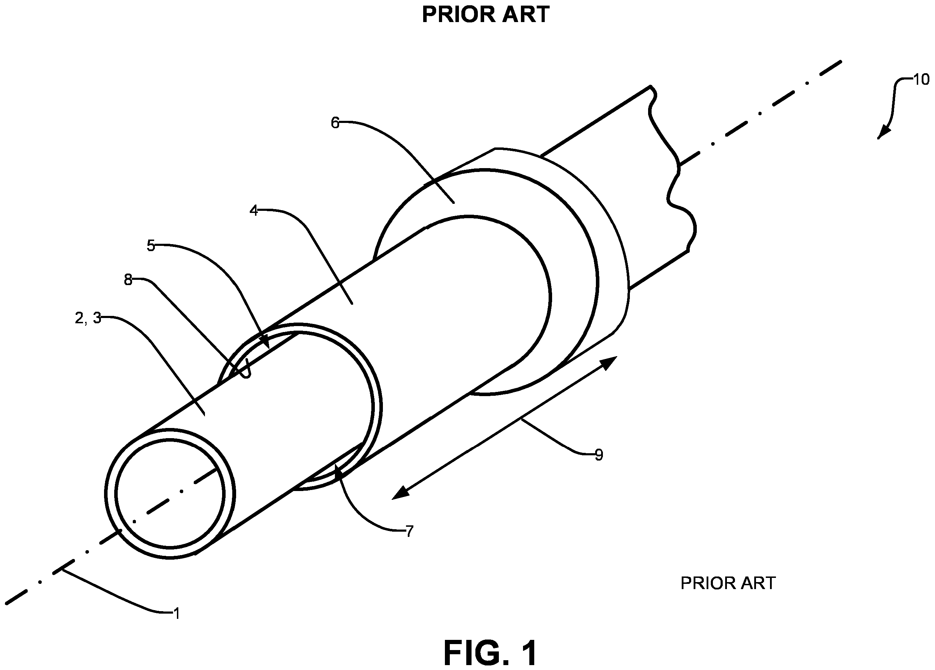

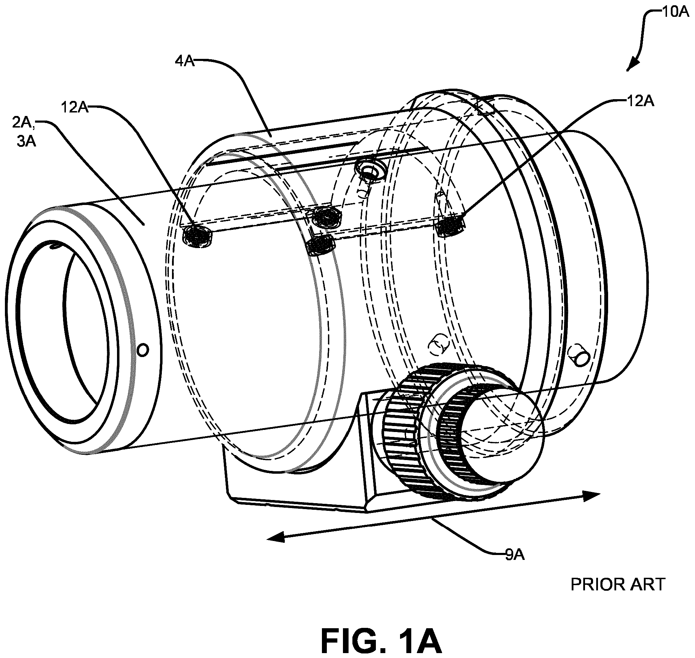

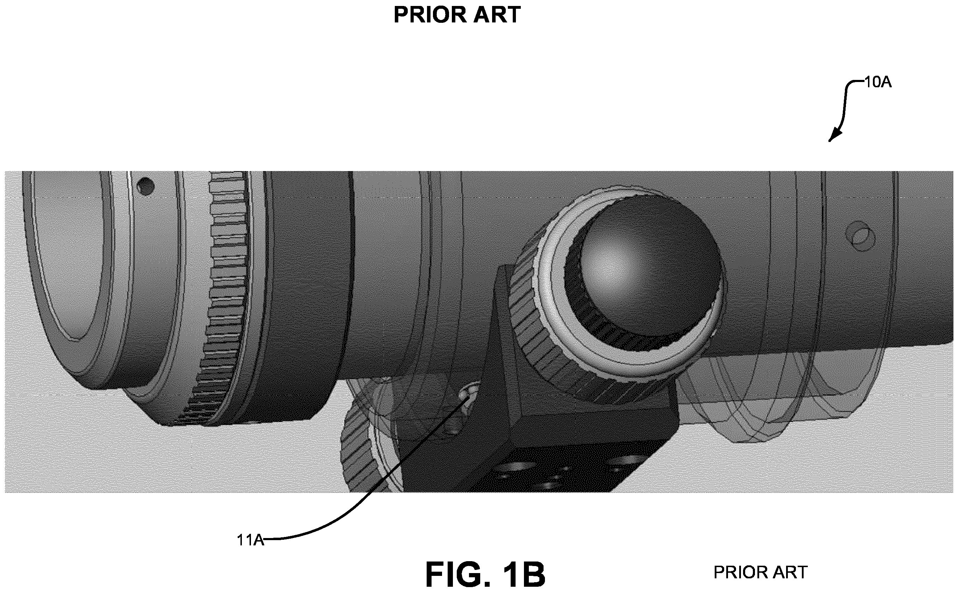

FIG. 1 schematically illustrates a conventional prior art focusing system 10. Prior art focusing system 10 comprises a moving tube 4 and a fixed tube 2. Optical elements 6 may be coupled to moving tube 4. Both moving tube 4 and fixed tube 2 extend in a longitudinal direction indicated by double-headed arrow 9 and are generally co-axial along axis 1 which extends in longitudinal direction 9.

In the illustrated FIG. 1 embodiment, moving tube 4 has a diameter larger than the diameter of fixed tube 2 and is therefore the outer tube 4. Moving tube 4 comprises a bore-defining surface 8 defining a bore 5 such that fixed tube 2 extends through bore 5 of moving tube 4. When fixed tube 2 extends into bore 5 of moving tube 4, a clearance gap 7 with an annular cross-section (in a plane orthogonal to longitudinal direction 9) is typically formed between an outer circumferential surface 3 of inner tube 2 (in focusing system 10 of the FIG. 1 embodiment, fixed tube 2) and bore-defining surface 8 of outer tube 4 (in focusing system 10 of the FIG. 1 embodiment, moving tube 4). Clearance gap 7 allows relative movement between moving tube 4 and fixed tube 2 in longitudinal directions 9.

In operation, light rays enter the focusing system 10 along an optical axis 1. It is desirable that optical axis 1 is substantially parallel with longitudinal directions 9. Moving tube 4 may move in longitudinal direction 9 relative to fixed tube 2. Optical elements 6 which are coupled to moving tube 4 can be made to move in longitudinal directions 9 as moving tube 4 moves. The movement of optical elements 6 along longitudinal directions 9 causes optical elements 6 to move to different longitudinal positions along optical axis 1. Consequently, the focal point and/or other optical characteristics of optical elements 6 can move in longitudinal directions 9, thus allowing focus control. A variety of mechanisms for facilitating movement of moving tube 4 relative to fixed tube 2 in longitudinal directions 9 are known in the art. Some of the known mechanisms are described below.

In some focusing systems, there may be surface contact between fixed tube 2 and moving tube 4 (e.g. between bore-defining surface 8 of outer tube 4 and outer circumferential surface 3 of inner tube 2). Such surface contact may permit fixed tube 2 to provide support to moving tube 4. In some such focusing systems, clearance gap 7 between fixed tube 2 and moving tube 4 is filled with lubricant to minimize friction associated with surface contact between the two tubes 2, 4. The characteristics (e.g. size, shape and/or the like) of clearance gap 7 between fixed tube 2 and moving tube 4 (and any changes in such characteristics) may have significant impact on the operation of focusing system 10.

Large clearance 7 is typically conducive to smooth axial movement of moving tube 4 relative to fixed tube 2, but may permit moving tube 4 and any optical components 6 and/or optical equipment to move radially relative to fixed tube 2 (e.g. in directions orthogonal to longitudinal direction 9). Relative radial movement between moving tube 4 and fixed tube 2 can cause a deleterious effect known as image drift.

Small clearance 7 is conducive to reducing imaging drift of focusing system 7, but typically requires a relatively high degree of machining accuracy of the contact surfaces of moving tube 4 and fixed tube 2 (e.g. bore-defining surface 8 of outer tube 4 and outer circumferential surface 3 of inner tube 2) as well as a relatively high degree of assembly accuracy and correspondingly increases the cost of manufacturing.

Having a small clearance 7 between moving tube 4 and fixed tube 2 also makes focusing system 10 more prone to mechanical failures, which may impede the smooth movement of moving tube 4 relative to fixed tube 2. By way of non-limiting example, such mechanical failures, may be caused by scratches on the contact surface(s0, dust intrusion, a sharp increase in viscous damping of lubricant at low temperatures, etc. In some cases, moving tube 4 may be jammed due to such mechanical failures.

One conventional approach to addressing the above problems is to make use of linear guides or bearings to achieve linear contact between the fixed tube and the moving tube. Preload mechanisms may be used to eliminate the clearance. However, this conventional solution suffers from complex structure and high cost.

FIG.1A depicts a perspective view of a conventional prior art focusing system 10A with rotation bearings 12A. FIG. 1B depicts an enlarged partial perspective view of the FIG. 1A focusing system 10A showing the preload mechanism 11A.

Focusing system 10A comprises a moving (inner) tube 2A and a fixed (outer) tube 4A (shown in transparent). Fixed tube 4A has a diameter larger than that of moving tube 2A. Bearings 12A are placed between an outer circumferential surface 3A of moving tube 2A and an inner (bore-defining) surface (not expressly enumerated) of fixed tube 4A to facilitate movement of moving tube 2A relative to fixed tube 4A in longitudinal directions 9A. Preload mechanism 11A (as shown in FIG. 1B) exerts radially oriented (relative to axis 1A) force between inner tube 2A and outer tube 4 which tends to force outer surface 3A of inner tube 2A into engagement (contact) with bearings 12A and bearings 12A into engagement (contact) with the bore-defining surface of outer tube 4A.

Conventional focusing system 10A has the shortcomings of complex structure and high cost.

Accordingly, there remains a desire for a focusing system that is relatively low cost, simple and at least ameliorates image drift.

### SUMMARY

The following embodiments and aspects thereof are described and illustrated in conjunction with systems, tools and methods which are meant to be exemplary and illustrative, not limiting in scope. In various embodiments, one or more of the above-described problems have been reduced or eliminated, while other embodiments are directed to other improvements.

One aspect of the invention provides a focuser for an optical instrument such as a telescope. The focuser comprises a first tube that extends in a longitudinal direction, a second tube that extends in the longitudinal direction, the second tube comprising a bore-defining surface shaped to define a bore that extends in the longitudinal direction wherein the first tube extends into the bore, an optical element coupled to one of the first and second tubes for movement therewith, a padding element located between an outer surface of the first tube and the bore-defining surface of the second tube, the padding element shaped to define a plurality of slots that penetrate the padding element, a plurality of rolling members, with at least one rolling member located in each slot to make contact with the outer surface of the first tube and the bore-defining surface of the second tube, wherein relative movement between the first and second tubes in the longitudinal direction is facilitated by rolling movement in the longitudinal direction of the rolling members, in their respective slots, along the outer surface of the first tube and the bore-defining surface of the second tube.

The slots and rolling members may be shaped such that the slots confine the rolling members to movement with their respective slots. The slots may extend in longitudinal directions and the slots and rolling members may be shaped such that the slots guide the rolling members for rolling movement that is substantially limited to the longitudinal direction within their respective slots. The slots may be circularly shaped.

The plurality slots may comprise at least a first pair of slots that are spaced apart from one another in the longitudinal direction and at least a second pair of slots that are spaced apart from one another in angular directions about a longitudinally extending axis. The slots may be at least one of located and shaped such that the rolling movement in the longitudinal direction of the rolling members, in their respective slots, along the outer surface of the first tube and the bore-defining surface of the second tube maintains the first tube and the second tube in a substantially co-axial relationship to thereby mitigate image drift.

The slots may be at least one of located and shaped such that the rolling movement in the longitudinal direction of the rolling members, in their respective slots, along the outer surface of the first tube and the bore-defining surface of the second tube maintains the first tube and the second tube in a substantially co-axial relationship along the longitudinally extending axis to thereby mitigate image drift. The contact between the rolling members and the outer surface of the first tube and contact between the rolling members and the bore-defining surface of the second tube may maintain a space between the outer surface of the first tube and the bore-defining surface of the second tube.

The space between the outer surface of the first tube and the bore-defining surface of the second tube may have an annular cross-sectional shape in cross-sectional planes orthogonal to the longitudinal direction. The rolling members may comprise ball bearings. The rolling members may comprise cylindrical rollers (e.g. wheels). The plurality of slots may comprise at least four slots. The plurality of slots may comprise 8 to 10 slots. At least some of the plurality of slots may be arranged to be collinear with, and spaced apart from, one another in the longitudinal direction. At least two groups of slots from among the plurality of slots may be arranged to be collinear with, and spaced apart from, one another in the longitudinal direction.

At least some of the plurality of slots may be arranged to be located at the same locations in the longitudinal direction and to be angularly spaced apart from one another about a longitudinally extending axis. At least two groups of slots from among the plurality of slots may be arranged to be located at the same locations in the longitudinal direction and to be angularly spaced apart from one another about a longitudinally extending axis. The padding element may be semi-tubularly shaped and may extend in the longitudinal direction with a semi-annular cross-section in planes orthogonal to the longitudinal direction that subtends an arc less than 360°. The arc may be in a range of about 45°-180°. The arc may be in a range of about 75°-150°.

The focuser may comprise an orthogonal biasing system operative to apply an orthogonal force against the second tube, the orthogonal force oriented to have a component orthogonal to the longitudinal direction, the orthogonal force maintaining contact between the rolling members and the outer surface of the first tube and contact between the rolling members and the bore-defining surface of the second tube and maintaining the first tube and the second tube in a substantially co-axial relationship to thereby mitigate image drift.

The focuser may comprise an orthogonal biasing system operative to apply an orthogonal force against the first tube, the orthogonal force oriented to have a component orthogonal to the longitudinal direction, the orthogonal force maintaining contact between the rolling members and the outer surface of the first tube and contact between the rolling members and the bore-defining surface of the second tube and maintaining the first tube and the second tube in a substantially co-axial relationship to thereby mitigate image drift.

The orthogonal biasing system may comprise a biasing mechanism comprising a compressed spring and a pressure plate connected directly or indirectly, through another fixed component, to a base of the focuser. The pressure plate may be adjustably connected to the base to thereby control the amount of orthogonal force applied by the orthogonal biasing system.

The orthogonal biasing system may further comprise a friction block coupled to one of the first and second tubes, the friction block comprising a friction surface, a focus-adjustment shaft in contact with the friction surface and supported for rotation about a focus-adjustment axis that is substantially orthogonal to the longitudinal direction, and a biasing mechanism for application of a second force which forces the focus-adjustment shaft against the friction surface and in turn creates the orthogonal force.

The biasing system may comprise a biasing mechanism comprising a compressed spring and a pressure plate connected directly or indirectly, through another fixed component, to a base of the focuser. The pressure plate may be adjustably connected to the base to thereby control the amount of orthogonal force applied by the orthogonal biasing system. The second force may be oriented in a direction that is substantially orthogonal to both the longitudinal direction and the focus-adjustment axis. The second force may be oriented in a direction that has a component that is orthogonal to both the longitudinal direction and the focus-adjustment axis.

The focuser may comprise a shaft support block defining a concavity wherein the focus-adjustment shaft is supported by the shaft support block within the concavity. The focuser may comprise one or more pivot joints and wherein the focus-adjustment shaft is supported for rotation about the focus-adjustment axis by the one or more pivot joints. The orthogonal force may assist with facilitating rolling movement in the longitudinal direction of the rolling members, in their respective slots, along the outer surface of the first tube and the bore-defining surface of the second tube. The orthogonal force may assist with mitigating sliding movement of the rolling members along the outer surface of the first tube and the bore-defining surface of the second tube. The focuser may comprise a longitudinal force-application mechanism connected for providing the force that causes the relative movement between the first and second tubes in the longitudinal direction. The longitudinal force-application mechanism may comprise the friction block, the focus-adjustment shaft and the biasing mechanism.

Another aspect of the invention provides a focuser for an optical instrument such as a telescope. The focuser comprises a first tube that extends in a longitudinal direction, a second tube that extends in the longitudinal direction, the second tube comprising a bore-defining surface shaped to define a bore that extends in the longitudinal direction wherein the first tube extends into the bore, an optical element coupled to one of the first and second tubes for movement therewith, at least one of an outer surface of the first tube and the bore-defining surface of the second tube shaped to define a plurality of grooves, a plurality of rolling members, with at least one rolling member located in each groove to make contact with the outer surface of the first tube and the bore-defining surface of the second tube, wherein relative movement between the first and second tubes in the longitudinal direction is facilitated by rolling movement in the longitudinal direction of the rolling members, in their respective grooves, along the outer surface of the first tube and the bore-defining surface of the second tube.

The outer surface of the first tube may be shaped to define a first plurality of grooves; the bore-defining surface of the second tube may be shaped to define a second plurality of grooves; at least one rolling member may be located in each of the first plurality of grooves and in each of the second plurality of grooves. The grooves and rolling members may be shaped such that the grooves confine the rolling members to movement with their respective grooves. The grooves may extend in longitudinal directions and the grooves and rolling members may be shaped such that the grooves guide the rolling members for rolling movement that is substantially limited to the longitudinal direction within their respective grooves.

The plurality grooves may comprise at least a first pair of grooves that are spaced apart from one another in the longitudinal direction and at least a second pair of grooves that are spaced apart from one another in angular directions about a longitudinally extending axis. The grooves may be at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship to thereby mitigate image drift.

The grooves may be at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship along the longitudinally extending axis to thereby mitigate image drift. The contact between the rolling members and the outer surface of the first tube and contact between the rolling members and the bore-defining surface of the second tube may maintain a space between the outer surface of the first tube and the bore-defining surface of the second tube.

The space between the outer surface of the first tube and the bore-defining surface of the second tube may have an annular cross-sectional shape in cross-sectional planes orthogonal to the longitudinal direction. The rolling members may comprise ball bearings. The rolling members may comprise cylindrical rollers (e.g. wheels).

The focuser may comprise an orthogonal biasing system operative to apply an orthogonal force against the second tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift. The focuser may comprise an orthogonal biasing system operative to apply an orthogonal force against the first tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift.

The orthogonal biasing system may comprise a biasing mechanism comprising a compressed spring and a pressure plate connected directly or indirectly, through another component, to a base of the focuser. The pressure plate may be adjustably connected to the base to thereby control the amount of orthogonal force applied by the orthogonal biasing system. The orthogonal biasing system may further comprise a friction block coupled to one of the first and second tubes, the friction block comprising a friction surface, a focus-adjustment shaft in contact with the friction surface and supported for rotation about a focus-adjustment axis that is substantially orthogonal to the longitudinal direction, a biasing mechanism for application of a second force which forces the focus-adjustment shaft against the friction surface and in turn creates the orthogonal force.

The biasing system may comprise a biasing mechanism comprising a compressed spring and a pressure plate connected directly or indirectly, through another component, to a base of the focuser. The pressure plate may be adjustably connected to the base to thereby control the amount of orthogonal force applied by the orthogonal biasing system. The orthogonal force may assist with maintaining contact of the rolling members with the outer surface of the first tube and the bore-defining surface of the second tube. The orthogonal force may assist with facilitating rolling movement in the longitudinal direction of the rolling members, in their respective grooves. The force may assist with mitigating sliding movement of the rolling members in their respective grooves.

Another aspect of the invention provides a focuser for an optical instrument such as a telescope. The focuser comprises a first tube that extends in a longitudinal direction, a second tube that extends in the longitudinal direction, the second tube comprising a bore-defining surface shaped to define a bore that extends in the longitudinal direction wherein the first tube extends into the bore, an optical element coupled to one of the first and second tubes for movement therewith, a padding element located between an outer surface of the first tube and the bore-defining surface of the second tube, the padding element shaped to define a plurality of grooves in a surface thereof, a plurality of rolling members, with at least one rolling member located in each groove to make contact with the padding element surface and one of the outer surface of the first tube and the bore-defining surface of the second tube, wherein relative movement between the first and second tubes in the longitudinal direction is facilitated by rolling movement in the longitudinal direction of the rolling members, in their respective grooves, along the padding element surface and the one of the outer surface of the first tube and the bore-defining surface of the second tube.

The one of the outer surface of the first tube and the bore-defining surface of the second tube may be shaped to define a second plurality of grooves; at least one rolling member may be located in each of the plurality of grooves and in each of the second plurality of grooves. The grooves and rolling members may be shaped such that the grooves confine the rolling members to movement with their respective grooves. The grooves may extend in longitudinal directions and the grooves and rolling members may be shaped such that the grooves guide the rolling members for rolling movement that is substantially limited to the longitudinal direction within their respective grooves.

The plurality grooves may comprise at least a first pair of grooves that are spaced apart from one another in the longitudinal direction and at least a second pair of grooves that are spaced apart from one another in angular directions about a longitudinally extending axis. The grooves may be at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship to thereby mitigate image drift.

The grooves may be at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship along the longitudinally extending axis to thereby mitigate image drift. The contact between the rolling members and the padding element surface and between the rolling members and the one of the outer surface of the first tube and the bore-defining surface of the second tube may maintain a space between the outer surface of the first tube and the bore-defining surface of the second tube.

The space between the outer surface of the first tube and the bore-defining surface of the second tube may have an annular cross-sectional shape in cross-sectional planes orthogonal to the longitudinal direction. The rolling members may comprise ball bearings. The rolling members may comprise cylindrical rollers (e.g. wheels). The padding element may be semi-tubularly shaped and extends in the longitudinal direction with a semi-annular cross-section in planes orthogonal to the longitudinal direction that subtends an arc less than 360°.

The focuser may comprise an orthogonal biasing system operative to apply an orthogonal force against the second tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift. The focuser may comprise an orthogonal biasing system operative to apply an orthogonal force against the first tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift.

The orthogonal biasing system may comprise a biasing mechanism comprising a compressed spring and a pressure plate connected directly or indirectly, through another component, to a base of the focuser. The pressure plate may be adjustably connected to the base to thereby control the amount of orthogonal force applied by the orthogonal biasing system. The orthogonal biasing system may further comprise a friction block coupled to one of the first and second tubes, the friction block comprising a friction surface, a focus-adjustment shaft in contact with the friction surface and supported for rotation about a focus-adjustment axis that is substantially orthogonal to the longitudinal direction, a biasing mechanism for application of a second force which forces the focus-adjustment shaft against the friction surface and in turn creates the orthogonal force.

The biasing system may comprise a biasing mechanism comprising a compressed spring and a pressure plate connected directly or indirectly, through another component, to a base of the focuser. The pressure plate may be adjustably connected to the base to thereby control the amount of orthogonal force applied by the orthogonal biasing system. The orthogonal force may assist with maintaining contact of the rolling members with the outer surface of the first tube and the bore-defining surface of the second tube. The orthogonal force may assist with facilitating rolling movement in the longitudinal direction of the rolling members, in their respective grooves. The orthogonal force may assist with mitigating sliding movement of the rolling members in their respective grooves.

A further aspect of the invention provides a method for focusing an optical instrument such as a telescope. The method comprises providing a first tube that extends in a longitudinal direction, providing a second tube that extends in the longitudinal direction, the second tube comprising a bore-defining surface shaped to define a bore that extends in the longitudinal direction wherein the first tube extends into the bore, providing an optical element coupled to one of the first and second tubes for movement therewith, providing a padding element located between an outer surface of the first tube and the bore-defining surface of the second tube, the padding element shaped to define a plurality of slots that penetrate the padding element, providing a plurality of rolling members, with at least one rolling member located in each slot to make contact with the outer surface of the first tube and the bore-defining surface of the second tube, facilitating relative movement between the first and second tubes in the longitudinal direction by rolling movement in the longitudinal direction of the rolling members, in their respective slots, along the outer surface of the first tube and the bore-defining surface of the second tube.

Another further aspect of the invention provides a method for focusing an optical instrument such as a telescope. The method comprises providing a first tube that extends in a longitudinal direction, providing a second tube that extends in the longitudinal direction, the second tube comprising a bore-defining surface shaped to define a bore that extends in the longitudinal direction wherein the first tube extends into the bore, providing an optical element coupled to one of the first and second tubes for movement therewith, providing at least one of an outer surface of the first tube and the bore-defining surface of the second tube shaped to define a plurality of grooves, providing a plurality of rolling members, with at least one rolling member located in each groove to make contact with the outer surface of the first tube and the bore-defining surface of the second tube, facilitating relative movement between the first and second tubes in the longitudinal direction by rolling movement in the longitudinal direction of the rolling members, in their respective grooves, along the outer surface of the first tube and the bore-defining surface of the second tube.

Yet another aspect of the invention provides a method for focusing an optical instrument such as a telescope. The method comprises providing a first tube that extends in a longitudinal direction, providing a second tube that extends in the longitudinal direction, the second tube comprising a bore-defining surface shaped to define a bore that extends in the longitudinal direction wherein the first tube extends into the bore, providing an optical element coupled to one of the first and second tubes for movement therewith, providing a padding element located between an outer surface of the first tube and the bore-defining surface of the second tube, the padding element shaped to define a plurality of grooves in a surface thereof, providing a plurality of rolling members, with at least one rolling member located in each groove to make contact with the padding element surface and one of the outer surface of the first tube and the bore-defining surface of the second tube, facilitating relative movement between the first and second tubes in the longitudinal direction by rolling movement in the longitudinal direction of the rolling members, in their respective grooves, along the padding element surface and the one of the outer surface of the first tube and the bore-defining surface of the second tube.

### BRIEF DESCRIPTION OF THE DRAWINGS

Further features and advantages of the present invention will become apparent from the following detailed description, taken in combination with the appended drawings, in which:
FIG. 1 schematically illustrates a conventional prior art focusing system.
FIG. 1A depicts a perspective view of a conventional prior art focusing system.
FIG. 1B depicts an enlarged partial perspective view of the conventional prior art focusing system of FIG. 1A.
FIG. 2 schematically illustrates a cross sectional view of an optical instrument, in accordance with an example embodiment.
FIG. 3 schematically illustrates a cross sectional view of a focusing system in accordance with an example embodiment.
FIG. 4 illustrates an exploded perspective view of the moving tube and the fixed tube of the FIG. 3 focusing system.
FIG. 5A schematically illustrates a perspective assembled view of the moving tube and the fixed tube shown in FIG. 4.
FIG. 5B schematically illustrates another perspective assembled view of the moving tube and the fixed tube shown in FIG. 4.
FIG. 6 schematically illustrates a partial cross sectional view of the FIG. 3 focusing system along line 6-6 shown in FIG. 5B, in accordance with an embodiment.
FIG. 7 schematically illustrates a cross sectional view of the FIG. 3 focusing system along line 7-7 shown in FIG. 3, in accordance with an embodiment.
FIG. 8A illustrates a perspective view of a padding element, in accordance with an example embodiment.
FIG. 8B illustrates a cross sectional view of another example focusing system comprising the padding element shown in FIG. 8A.
FIGs. 9A and 9B schematically illustrate perspective views of other padding elements in accordance with other example embodiments.
FIG. 9C schematically illustrates a perspective view of a fixed tube, in accordance with an example embodiment.
FIG. 9D schematically illustrates a perspective view of a moving tube, in accordance with an example embodiment.

It will be noted that throughout the appended drawings, like features are identified by like reference numerals.

### DETAILED DESCRIPTION

A focuser for an optical instrument such as a telescope is disclosed. The focuser comprises: a first tube that extends in a longitudinal direction; and a second tube that extends in the longitudinal direction. The second tube comprises a bore-defining surface shaped to define a bore that extends in the longitudinal direction. The first tube extends into the bore. An optical element is coupled to one of the first and second tubes for movement therewith. A padding element is located between an outer surface of the first tube and the bore-defining surface of the second tube and is shaped to define a plurality of slots that penetrate the padding element. The focuser comprises a plurality of rolling members, with at least one rolling member located in each slot to make contact with the outer surface of the first tube and the bore-defining surface of the second tube. Relative movement between the first and second tubes in the longitudinal direction is facilitated by rolling movement in the longitudinal direction of the rolling members, in their respective slots, along the outer surface of the first tube and the bore-defining surface of the second tube.

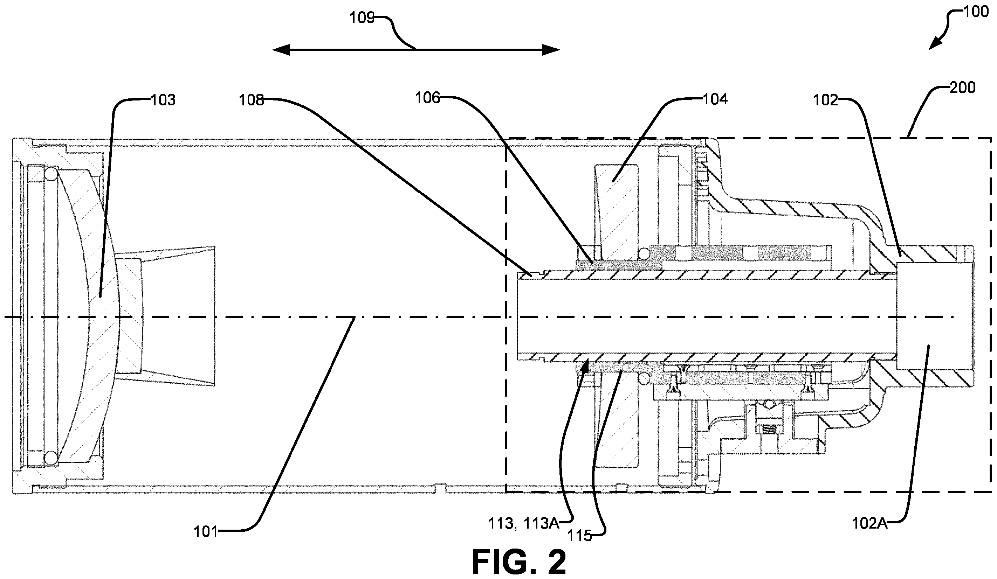

FIG. 2 schematically illustrates an optical instrument (in the illustrated embodiment, a telescope) 100 according to an example embodiment of this invention. Telescope 100 includes a focusing system 200 according to an example embodiment of the invention.

Focusing system 200 comprises a base 102. In some embodiments, base 102 comprises a short tube 102A for holding an eyepiece or a diagonal. Focusing system 200 comprises a fixed tube 108 coupled to and supported by base 102 and a moving tube 106 moveable coupled to fixed tube 108 for relative movement between moving tube 106 and fixed tube 108. Moving tube 106 and fixed tube 108 are both tubular and extend in a longitudinal direction (indicated by double-headed arrow) 109. Moving tube 106 may be moved in longitudinal directions 109 relative to fixed tube 108. Because of the features of focusing system 200 (described in more detail below), this relative movement between moving tube 106 and fixed tube 108 in longitudinal directions 109 is facilitated while maintaining an orientation between moving tube 106 and fixed tube 108 that is more co-axial than prior art focusing systems - i.e. during this relative movement between moving tube 106 and fixed tube 108 in longitudinal directions 109, moving tube 106 and fixed tube 108 are relatively close to co-axial (along axis 101) compared to prior art focusing systems. It will be appreciated that deviation from such a co-axial relative orientation is associated with image drift. Consequently, by maintaining an orientation between moving tube 106 and fixed tube 108 that is relatively more co-axial than prior art focusing systems, focusing system 200 mitigates image drift relative to prior art focusing systems.

In the FIG. 2 embodiment, moving tube 106 has a diameter greater than that of fixed tube 108. Therefore, moving tube 106 comprises a bore 113. Fixed tube 108 may extend into bore 113 of moving tube 106. A gap 113A may form between an outer circumferential surface of fixed tube 108 and an inner bore-defining surface of moving tube 106. In other embodiments, moving tube 106 may have a diameter smaller than that of fixed tube 108, so that moving tube 106 extends in a bore of fixed tube 108.

Optical element (in the illustrated FIG. 2 embodiment, a mirror) 104 is rigidly coupled to and supported by moving tube 106. In the illustrated embodiment of FIG. 2, optical element 104 comprises a bore and moving tube 106 extends into the bore of optical element 104 and bears against a bore-defining surface 115 of optical element 104 to thereby support optical element 104. In other embodiments, optical element 104 may be additionally or alternatively mounted to and/or supported by moving tube 106 using any suitable technique. When the position of moving tube 106 is adjusted (relative to fixe tube 108) along longitudinal directions 109, the position of optical element 104 moves with moving tube 106, thus achieving focus adjustment.

In operation, light rays enter telescope 100 through lens 103 and travel in one of longitudinal directions 109 toward focusing system 200. As the position of optical element 104 moves along axis 101, the longitudinal direction locations at which the light rays contact optical element 104 also move. The focus of telescope 100 changes accordingly.

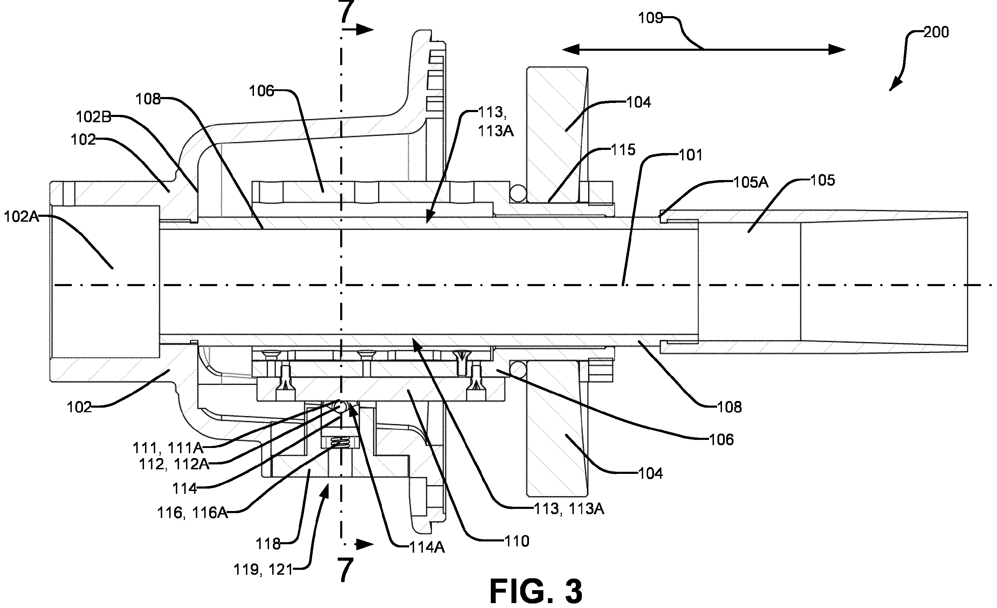

FIG. 3 schematically illustrates a detailed view of the FIG. 2 focusing system 200 according to an example embodiment.

Referring to FIG. 3, focusing system 200 comprises a friction block 110 coupled to moving tube 106 and a focus-adjustment shaft 112 adjacent to, and in contact with, a friction surface 111 of friction block 110 at contact point 111A. Focus-adjustment shaft 112 may be rotated about its axis 112A (which extends into and out of the page in the FIG. 3 view and which is generally orthogonal to longitudinal directions 109) by a user or by the motor of an auto-focusing system to adjust the focus of focusing system 200 by causing moving tube 106 to move relative to fixed tube 108 in longitudinal directions 109.

When focus-adjustment shaft 112 rotates, a friction force oriented in one of longitudinal directions 109 is generated on friction surface 111. Clockwise rotation of focus-adjustment shaft 112 generates a friction force in a first longitudinal direction 109. Counter clockwise rotation of focus-adjustment shaft 112 generates a friction force in a second longitudinal direction 109 that is opposite to the first longitudinal direction.

Focusing system 200 further comprises a shaft-support block 114 comprising a concavity 114A (in the illustrated embodiment, a groove having a V-shaped cross-section (in a plane comprising axis 101) with generally planar sidewalls) shaped to support focus-adjustment shaft 112 and hold focus-adjustment shaft 112 in position in concavity 114A while permitting rotational motion of focus-adjustment shaft 112 about its axis 112A.

In other embodiments, concavity 114A of shaft-support block 114 may have other shapes (e.g. other cross-sectional shapes in a plane comprising axis 101) to support focus-adjustment shaft 112 in position in concavity 114A while permitting such rotational motion of focus-adjustment shaft 112. In other embodiments, shaft-support block 114 may comprise other mechanisms for supporting focus-adjustment shaft 112 in position while permitting such rotational motion of focus-adjustment shaft 112.

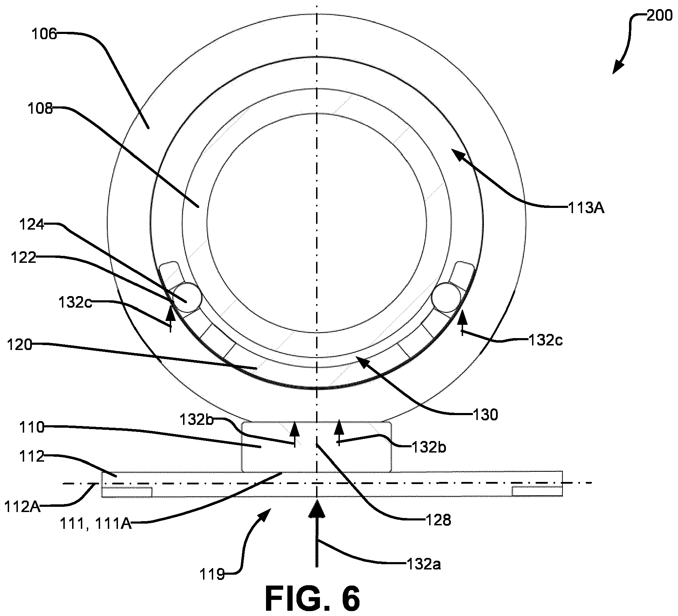

Focusing system 200 further comprises a biasing mechanism or forcer 116 which forces focus-adjustment shaft 112 against friction surface 111 (see force arrow 132a in Fig. 6) and (because of the contact between friction block 110 and moving tube 106) in turn applies force (see force arrows 132b) against moving tube 106. These forces are oriented in a direction that is generally orthogonal to longitudinal directions 109 or that has a directional component orthogonal to longitudinal directions 109 (and axis 101). Such forces 132a, 132b (and force 132c, explained in more detail below) may be referred to herein as orthogonal forces 132a, 132b, 132c (or collectively, orthogonal forces 132) because of their orientation that has a directional component orthogonal to longitudinal directions 109 (and axis 101). In the illustrated embodiment, biasing mechanism 116 comprises a spring 116A and a pressure plate 118. In the FIG. 3 embodiment, spring 116A is located between pressure plate 118 and shaft-support block 114. Pressure plate 118 may be adjustably (e.g. threadably) mounted to base 102, such that the adjustable location of pressure plate 118 adjustably compresses spring 116A, which in turn applies orthogonal force against shaft-support block 114 and forces focus-adjustment shaft 112 against friction surface 111 and (because of the contact between friction block 110 and moving tube 106) in turn applies orthogonal force 132a against moving tube 106. The direction that biasing mechanism 116 forces focus-adjustment shaft 112 against friction surface 111 (orthogonal force 132a) and applies force against moving tube 106 (orthogonal force 132b)) may be generally orthogonal to (or have components orthogonal to) longitudinal directions 109 and axis 101 and to the rotational axis 112A of focus-adjustment shaft 112 and may be generally normal to friction surface 111, although such orthogonal forces 132 may have small non-orthogonal components.

When focus-adjustment shaft 112 rotates about its axis 112A, a friction force oriented in one of longitudinal directions 109 is generated on friction surface 111. This friction force in turn displaces friction block 110 relative to focus-adjustment shaft 112 in the corresponding one of longitudinal direction 109. Focus-adjustment shaft 112 is held within concavity 114A by shaft-support block 114. Since friction block 110 is rigidly coupled to moving tube 106 and optical element 104 is rigidly coupled to moving tube 106, movement of friction block 110 causes corresponding movement of moving tube 106 and optical element 104 in the corresponding longitudinal direction 109.

Fixed tube 108 is rigidly fixed to base 102. Therefore, as moving tube 106 moves along one of longitudinal directions 109, moving tube 106 moves relative to fixed tube 108. In the illustrated example embodiment of focusing system 200, moving tube 106 may move in longitudinal directions 109 with a range of motion between base wall 102B of base 102 and connecting end 105A of a shading tube 105. To ensure smooth and stable relative movement between moving tube 106 and fixed tube 108, focusing system 200 may further comprise suitable mechanisms between moving tube 106 and fixed tube 108 to facilitate the relative movement as described below.

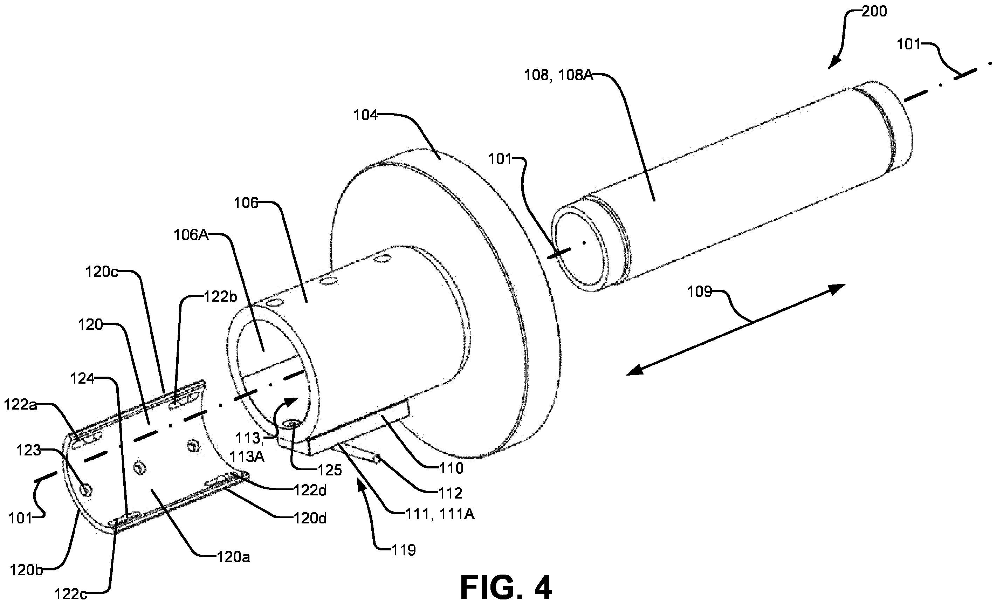

FIG. 4 schematically illustrates an exploded view of the FIG. 3 focusing system 200 . The illustrated drawing of FIG. 4 omits some of the components of focusing system 200 to more clearly illustrate certain features of focusing system 200.

Focusing system 200 comprises a padding element 120. In the FIG. 4 embodiment, padding element 120 is semi-tubularly shaped (i.e. with a semi-annular cross-section in a plane orthogonal to axis 101 that subtends an arc of less than 360° (in some embodiments in a range of 45°-180° and in some embodiments in a range of 75°-150°) about axis 101) and is sized to be placed in gap 113A between moving tube 106 and fixed tube 108. Padding element 120 comprises a first (e.g. concave) surface 120a which, in the illustrated embodiment, is disposed to be adjacent to fixed (inner) tube 108 and an opposing second (e.g. convex) surface 120b which, in the illustrated embodiment, is disposed to be adjacent to moving (outer) tube 106.

Padding element 120 comprises a first longitudinally-extending edge 120c and a second longitudinally extending edge 120d, where first and second surface 120a and 120b extend between first and second edges 120c and 120d. First (e.g. concave) and second (e.g. convex) surfaces 120a and 120b may be shaped to conform with (e.g. to be complimentary to) the shape of an exterior (convex and/or circumferential) surface 108A of fixed tube 108 and an interior (concave, bore-defining) surface 106A of moving tube 106, respectively. For example, as described above, cross-sections of first (e.g. concave) and second (e.g. convex) surfaces 120a, 120b in a plane orthogonal to axis 101 may have arcuate shapes.

Padding element 120 is shaped to define slots 122a-d (collectively slots 122) that extend in longitudinal directions 109. In focusing system 200 of the FIG,. 4 embodiment, longitudinally-extending slots 122 penetrate through padding element 120 (from surface 120a to surface 120b). However, this is not necessary. Slots 122 may also be formed on first surface 120a or second surface 120b of padding element 120. In other embodiments, slots 122 may be formed on both first and second surfaces 120a and 120b of padding element 120.

Rolling members 124 may be located in longitudinally extending slots 122. For example, rolling members 124 may comprise ball bearings. In some embodiments, one rolling member 124 is placed in each slot 122.

Longitudinally-extending slots 122 may be of any suitable shape to permit rolling members 124 to roll in longitudinal directions 109 within slots 122.

The width of slots 122 (in directions transverse to their longitudinal extension) may be of a dimension that restricts the movement of rolling members 124 in such transverse directions. In some embodiments, the width of slots 122 (in directions transverse to their longitudinal extension) is of such a dimension that rolling members 124 has substantially no range of transverse motion along the width of slots 122.

In some embodiments, slots 122 may be arranged on padding element 120 with certain geometric relations. For example, in the illustrated FIG. 4 embodiment, focusing system 300 comprises two pairs of slots (122a and 122b; and 122c and 122d) respectively collinear with one another in longitudinal directions 109. In the illustrated FIG. 4 embodiment, the longitudinal distance between slots 122a and 122b is substantially identical with the distance between slots 122c and 122d. Slot 122a is at a longitudinal location similar to that of slot 122c, and slot 122b is at a longitudinal location similar to that of slot 122d. Other configurations of slots 122 on padding element 120 are possible and described below.

Padding element 120 may be rigidly coupled to either moving tube 106 or fixed tube 108. In the illustrated FIG. 4, padding element 120 is shaped to define openings 123 for coupling to moving tube 106. For example, to couple padding element 120 with moving tube 106, openings 123 of padding element 120 are aligned with corresponding fastening receptors 125 of moving tube 106. Fastening devices (e.g. screws, rivets and/or the like - not shown in FIG. 4) may then be driven through openings 123 and into fastening receptors 125 to securely fasten padding element 120 to moving tube 106.

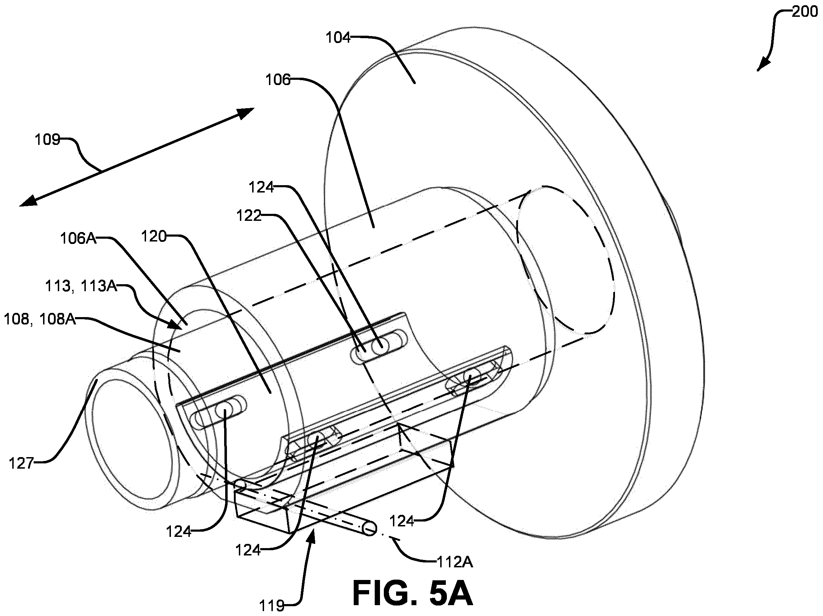

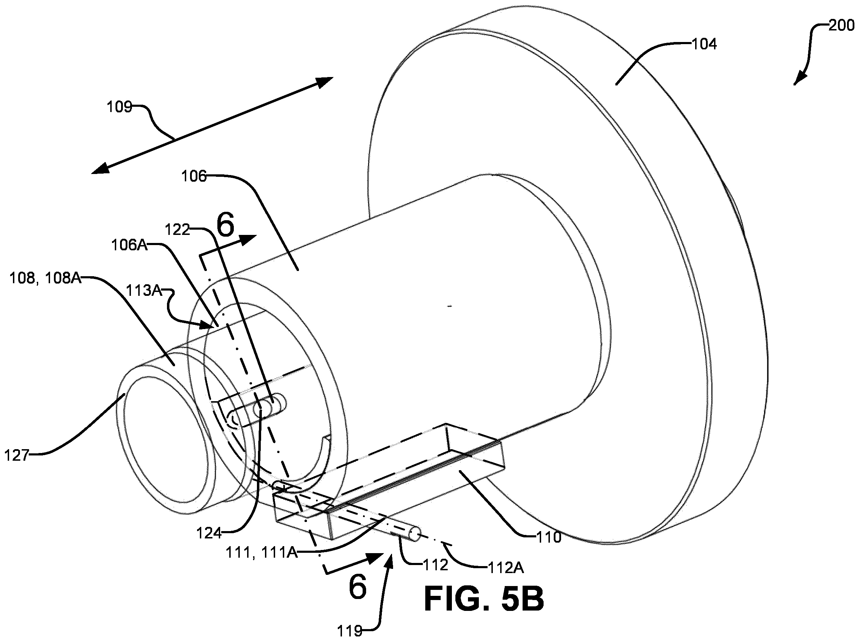

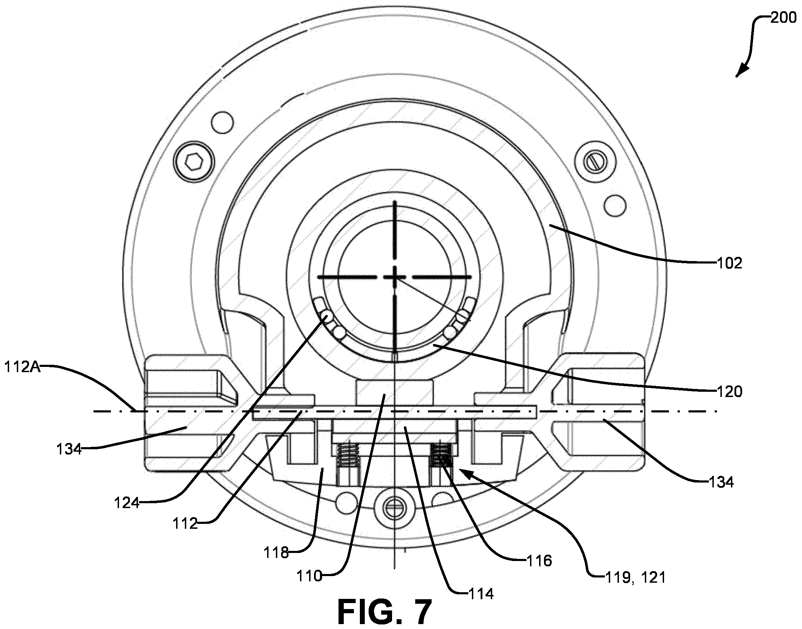

FIG. 5A and FIG. 5B (together, FIG 5) schematically depict an assembled view of focusing system 200 in a perspective view according to an embodiment. Some parts of focusing system 200 shown in FIG. 5 are illustrated as being see-through and drawn in hidden (dashed) lines to more clearly show other features drawn in solid lines. Some parts of focusing system 200 are not expressly shown in FIG. 5, so that other parts of focusing system 200 are more visible. FIG. 6 is a schematic diagram of a cross sectional view of focusing system 200 along the cross section line 6-6 indicated in FIG. 5B. FIG. 7 is a cross sectional view of focusing system 200 along the cross section line 7-7 indicated in FIG. 3.

As can be see in FIG. 5, moving tube 106 comprises a bore-defining surface 106A which is shaped to provide a bore 113 through which fixed tube 108 extends. End 127 of fixed tube 108 is fixed to (e.g. fixedly coupled to or integrally formed with) base 102 (not shown in FIG. 5). Padding 120 is placed between moving tube 106 and fixed tube 108. Padding 120 may be securely coupled to moving tube 106, as described above. Rolling members 124 placed in slots 122 of padding 120 facilitate relative movement between moving tube 106 and fixed tube 108 in longitudinal directions 109. In particular, rolling members 124 bear on exterior (circumferential) surface 108A of fixed (inner) tube 108 and on bore-defining surface 106A of moving (outer) tube 106 and roll between these two surfaces and along slots 122 as moving tube 106 moves relative to fixed tube 108 in longitudinal directions 109. Slots 122 may guide rolling members 124 to roll in longitudinal directions 109 and may limit movement of rolling members 124 in other directions.

Friction block 110 is coupled to moving tube 106 and focus-adjustment shaft 112 is adjacent to, and in contact with, a friction surface 111 of friction block 110 at contact point 111A.

Focus-adjustment shaft 112 may be rotated about its axis 112A by a user or by the motor of an auto-focusing system to adjust the focus of focusing system 200 by causing moving tube 106 to move relative to fixed tube 108 in longitudinal directions 109 as described above. When focus-adjustment shaft 112 rotates, a friction force oriented in one of longitudinal directions 109 is generated on friction surface 111.

FIG. 6 is a schematic diagram of a cross sectional view of focusing system 200 along the cross section line 6-6 indicated in FIG. 5B. Referring to FIG. 6, focusing system 200 is symmetrical about a mid-plane 128 that separates focusing system 200 into a left half and a right half. Both friction block 110 and focus-adjustment shaft 112 are symmetrical relative to mid-plane 128. Likewise, moving tube 106, fixed tube 108 and padding element 120 are also symmetrical about mid-plane 128. Mid-plane128 of symmetry is preferably aligned with the direction of gravity although this is not necessary.

As can be seen in FIG. 6, because of the presence of rolling members 124, a clearance space 130 exists between padding element 120 and fixed tube 108. Clearance space 130 ensures that only rolling members 124 make physical contact with fixed tube 108. A gap 113A exists between moving tube 106 and fixed tube 108 due to the presence of padding 120 and rolling members 124.

As discussed above, orthogonal force 132a is applied to focus-adjustment shaft 112 by bias mechanism 116 (not shown in FIG. 6) which in turn (via its contact with friction block 110 and the contact of friction block 110 with moving tube 106) applies orthogonal force 132b against moving tube 106. As also discussed above, the direction of these orthogonal forces 132 may be orthogonal to longitudinal directions 109 and axis 101 or at least have a component that is orthogonal to longitudinal directions 109 and axis 101 and tend to force moving tube 106 towards fixed tube 108. Accordingly, the combination of bias mechanism 116, shaft support block 114, focus-adjustment shaft 112 and friction block 110 may be considered to be a orthogonal biasing system 121 (see Fig. 3) which forces moving tube 106 toward the exterior (circumferential) surface 108A of fixed tube 108 (see orthogonal force arrows 132c in Fig. 6). In this manner, the orthogonal force 132a applied by orthogonal biasing system 121 applies corresponding orthogonal force 132b on moving tube 106 that applies corresponding orthogonal force 132c that maintains contact between the bore-defining surface 106A of moving tube 106 and rolling members 124 and in turn between rolling members 124 and the exterior (circumferential) surface 108A of fixed tube 108. By the application of these orthogonal forces 132, orthogonal biasing system 121 maintains contact between the bore-defining surface 106A of moving tube 106 and rolling members 124 and in turn between rolling members 124 and the exterior (circumferential) surface 108A of fixed tube 108, which in turn minimizes play (e.g. radial relative to axis 101) between tubes 106, 108.

Advantageously (as discussed in more detail below), orthogonal biasing system 121 permits longitudinal movement of moving tube 106 relative to fixed tube 108 while maintaining these orthogonal forces 132. In the illustrated embodiment, orthogonal biasing system 121 permits this movement by the rolling relationship between force-adjustment shaft 112 and friction block 110 (as described in more detail below), but in other embodiments, this permitted longitudinal movement between tubes 106, 108 may be implemented using suitable low-friction contact (e.g. sliding). In some embodiments, particularly, where longitudinal force-application mechanism 119 (discussed in more detail below) is implemented using other components, orthogonal biasing system 121 may be implemented using other suitable additional or alternative components which apply orthogonal forces 132b to moving tube 106 and orthogonal forces 132c which maintain contact between the bore-defining surface 106A of moving tube 106 and rolling members 124 and in turn between rolling members 124 and the exterior (circumferential) surface 108A of fixed tube 108.

Focuser 200 comprises a longitudinal force-application mechanism 119 which permits focus adjustment by providing the longitudinally oriented force which causes moving tube 106 (and corresponding optical element(s) 104) to move in longitudinal directions 109 (axial directions 101) relative to fixed tube 108. Advantageously, in the particular case of the illustrated embodiment, biasing mechanism 116 (spring 116A and pressure plate 118) provides the force that is used by both longitudinal force-application mechanism 119 and orthogonal biasing system 121 (although this is not necessary). More specifically, longitudinal force-application mechanism 119 and orthogonal biasing system 121 both derive force from biasing system 116 and both comprise bias mechanism 116, focus adjustment shaft 112 and friction block 110. The operation of longitudinal force-application mechanism 119 is now described in more detail.

Longitudinal force-application mechanism 119 of the illustrated embodiment comprises bias mechanism 116, focus adjustment shaft 112 and friction block 110. As discussed above, orthogonal force 132a applied by bias mechanism 116 on force-adjustment shaft 112 and by force-adjustment shaft 112 on friction block 110 comprises a force component which is oriented normal to friction surface 111 of friction block 110. Orthogonal force 132a causes a frictional force (i.e. a rolling friction force) to exist between friction surface 111 and focus-adjustment shaft 112 when focus-adjustment shaft is rotated about its axis 112A.

As shown in FIGs. 5, 6 and 7, a rotational torque about rotational axis 112A may be applied to focus-adjustment shaft 112 by a user or by the motor of an auto-focus system. Via the rolling frictional force between focus-adjustment shaft 112 and friction surface 111 of friction block 110, the rotational torque generated by the user or the auto-focus system on focus-adjustment shaft 112 creates a longitudinally oriented force (in one of the longitudinal directions 109) on friction block 110.

In some embodiments, the surface of concavity 114A of shaft-support block 114 comprises a low-friction surface to facilitate sliding motion of focus-adjustment shaft 112 as it rotates about its axis 112A. In other embodiments, focus system 200 comprises one or more pivot joint mechanism (not visible in the illustrated cross-sectional views) that facilitate the rotation of focus-adjustment shaft 112 within shaft support block 114. Such pivot joint mechanism(s) may maintain focus-adjustment shaft 112 spaced apart from the surface(s) of shaft support block 114, except at the locations of the pivot joints. Such a pivot joint mechanisms may comprise a pair of pivot joint mechanisms spaced apart from one another in the direction of axis 112A.

Friction block 110 may be rigidly coupled to, or integrally formed with, moving tube 106, such that longitudinal force on friction block 110 (caused by rotation of adjustment shaft 112) causes corresponding longitudinal force on moving tube 106. Due to the longitudinal force on moving tube 106, moving tube 106 moves in longitudinal directions 109 relative to fixed tube 108.

Longitudinal force-application mechanism 119 of the illustrated embodiment is one non-limiting example mechanism for applying the force that causes relative longitudinal movement between tubes 106, 108. In other embodiments, such longitudinal forces may be provided by any of a variety of other systems. By way of non-limiting example, focus-adjustment shaft 112 may be provided with a gear that may rotated against a rack-gear located on an exterior surface of moving tube 106 to permit longitudinally oriented force to be transferred to moving tube 106.

Upon the application of longitudinally oriented force on moving tube 106 by longitudinal force-application mechanism 119, relative movement between moving tube 106 and fixed tube 108 is facilitated by rolling members 124 rolling (within slots 122) against the exterior (circumferential) surface 108A of fixed tube 108 and the bore-defining surface 106A of moving tube 106.

In the illustrated embodiment of FIG. 6, orthogonal forces 132c act on rolling members 124 to cause rolling members 124 to bear against exterior surface 108A of fixed tube 108 and bore-defining surface 106A of moving tube 106 therefore facilitating rolling members 124 to roll against the two surfaces. In some embodiments, components of orthogonal forces 132c that are aligned with force 132a may be generated, in part, by force 132a. In currently preferred embodiments, the forces between tubes 106, 108 and rolling members 124 together with the surface properties of rolling members 124 and surfaces 106A, 108A are such that rolling members 124 roll, and do not slip, relative to surfaces 106A, 108A, although this is not necessary. In some embodiments, rolling members 124 may slip relative to either or both of surfaces 106A, 108A in addition to or in the alternative to rolling. In some embodiments, as rolling members 124 roll or otherwise move within slots 122, rolling members 124 move longitudinally along, and are guided to move longitudinally by, slots 122.

The mechanism for enabling longitudinal movement between moving tube 106 and fixed tube 108 in focusing system 200 (e.g. slotted pad 120 and rolling members 124) permits moving tube 106 and fixed tube to remain co-axially oriented relative to one another (at axis 101) even with repeated relative longitudinal movement, thereby ameliorating image drift that is present in many prior art focusing system designs. As discussed above, slotted pad 120 and rolling members 124 may be assisted by orthogonal biasing system 121 which forces tubes 106, 108 into contact with rolling members 124. Further, the mechanism for enabling longitudinal movement between moving tube 106 and fixed tube 108 in focusing system 200 (e.g. slotted pad 120, rolling members 124 and orthogonal biasing system 121) provide an inexpensive system for mitigating image drift and is unlikely to bind or to damage itself with repeated use.

Referring now to FIG. 7, focusing system 200 comprises knobs 134 that are coupled to focus-adjustment shaft 112 on each side of focus-adjustment shaft 112 such that knobs 134 are substantially coaxial with focus-adjustment shaft 112 about axis 112A. Knobs 134 are rotatable about axis 112A. When knobs 134 rotate about axis 112A, focus-adjustment shaft 112 is also made to rotate about axis 112A through its fixed coupling with knobs 134. Knobs 134 may be used, for example, for manual focus-adjustment.

Other configurations of padding element 120 and slots 122 are possible.

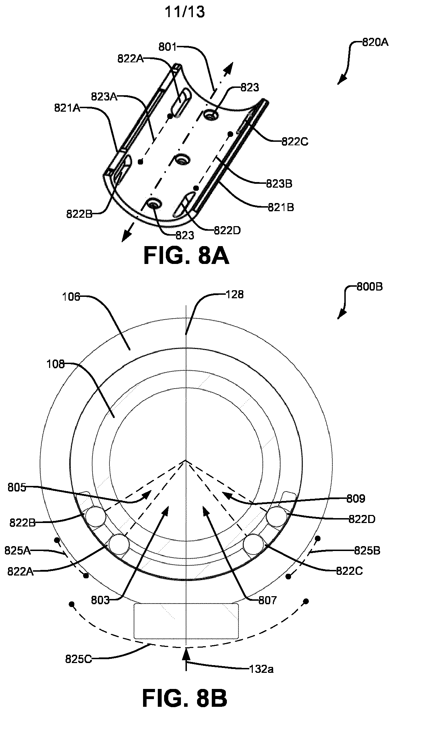

FIG. 8A is a perspective view of a padding element 820A according to another example embodiment. FIG. 8B is a cross sectional view of padding element 820A in a focusing system 800B according to an example embodiment.

Padding element 820A of the illustrated FIG. 8A embodiment is shaped to define a plurality of (e.g. four) slots 822A-D spaced apart on padding element 820A. Slots 822A-D are of a shape (e.g. longitudinally extending) which may be substantially similar to the shape described above for slots 122a-d.

For padding element 820A, the pair of slots 822A and 822B are non-collinear (e.g. slots 822A, 822B are angularly offset from one another about a longitudinally extending axis 801. As shown in illustrated FIG. 8B, slot 822A forms an angle 803 with mid-plane 128. Slot 822B forms an angle 805 with midline 128 such that angle 805 is greater than angle 803. In the illustrated embodiment of FIG. 8A, because angle 805 is greater than angle 803, slot 822B is more proximate to edge 821A of padding element 820A than slot 822A. However, this is not necessary. In other embodiments, slot 822A may be more angularly offset (from mid-plane 128) than slot 822B and therefore more proximate to edge 821A than slot 822B. Similarly, slots 822C and 822D are angularly offset from one another about longitudinally extending axis 801. As shown in illustrated FIG. 8B, slot 822C forms an angle 807 with midline 128. Slot 822D forms an angle 809 with midline 128 such that angle 809 is greater than angle 807. In other words, padding 820A comprises two pairs of non-collinear slots, namely, pair 822A-B and pair 822C-D.

In some embodiments, the longitudinal distance 823A between slot 822A and slot 822B may be different from the distance 823B between slot 822C and 822D.

As shown best in FIG. 8B, arc 825A denotes the arc length between slots 822B and 822A. In some embodiments, arc angle subtended by arc 825A is less than 30 degrees. Arc 825B denotes the arc length between slots 822D and 822C. In some embodiments, arc angle subtended by arc 825B is less than 30 degrees. Arc 825C denotes the arc length between slots 822A and 822C. In exemplary focusing system 800B, arc 825A and arc 825B are shorter (have shorter arc-lengths or smaller subtended angles) than arc 825C. In some embodiments, arc angle subtended by arc 825C is less than 180 degrees. In some embodiments, arc 825C spans about 120 degrees. The operation of focusing system 800B may be substantially similar to that of focusing system 200 described above, except that rolling member 124 roll in different slots 822 of padding element 820A. The angularly offset nature of slots 822 may provide additional support between fixed tube 108 and moving tube 106 and may help to ensure that tubes 106, 108 stay co-axial (at axis 101) during longitudinal movement of moving tube 106 relative to fixed tube 108 - which may further reduce image drift.

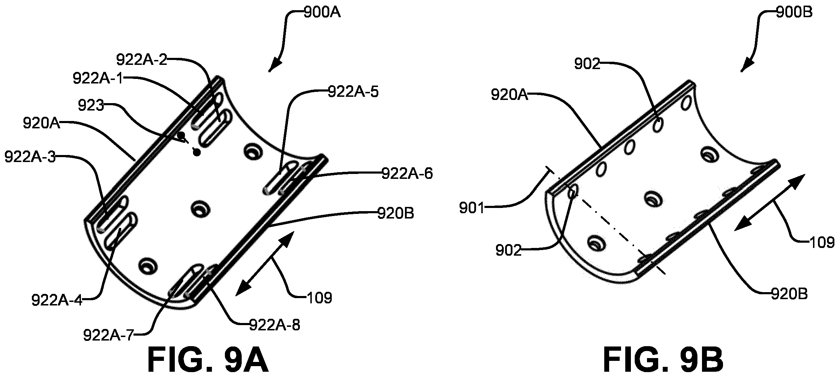

FIG. 9A is a perspective view of a padding element 900A according to another example embodiment. FIG. 9B is a perspective view of another padding element 900B according to another example embodiment.

Padding element 900A of the illustrated FIG. 9A embodiment is shaped to define a plurality of (e.g. eight) slots 922A-1 to 922A-8 (collectively slots 922A) spaced apart on padding element 900A. Slots 922A are of a shape (e.g. longitudinally extending) which may be substantially similar to the shape described above for slots 122a-d.

Padding element 900A is shaped to define two sets of collinear slots along each edge (920A, 920B) of padding 900A. For example, slot 922A-1 and slot 922A-3 are arranged proximate to edge 920A and collinear along longitudinal directions 109. Similarly, slot 922A-2 is collinear with slot 922A-4 along longitudinal directions 109. Slot 922A-1 and 922A-2 are positioned at a substantially similar longitudinal position along longitudinal directions 109 and angularly offset from each other by an arcuate distance 923. Similarly, slots 922A-3 and 922A-4 are positioned at a substantially similar longitudinal position along longitudinal directions 109 and angularly offset from each other by an arcuate distance 923. Slots 922A-5 to 922A-8 are arranged along edge 920B in a manner substantially similar to the arrangement of slots 922A-1 to 922A-4 along edge 920A.

Padding element 900B of illustrated FIG. 9B embodiment is shaped to define a plurality of circular slots 902 arranged along edges 920A and 920B.Circular slots 902 penetrate through padding element 900B. Circular slots 902 are circularly shaped to permit ball bearings (not shown) to rotate within circular slots 902 about a rotating axis that is substantially perpendicular to longitudinal directions 109 (for example, axis 901). In some embodiments, one rolling member (e.g. a ball bearing) 124 is placed in each of the plurality of circular slots 902.

In the illustrated embodiment of FIG. 9B, five circular slots 902 are shown on each edge 920A and 920B of padding element 900B. However, this is not necessary. Any suitable number of circular slots 902 may be arranged on each edge 920A and 920B of padding 900B.

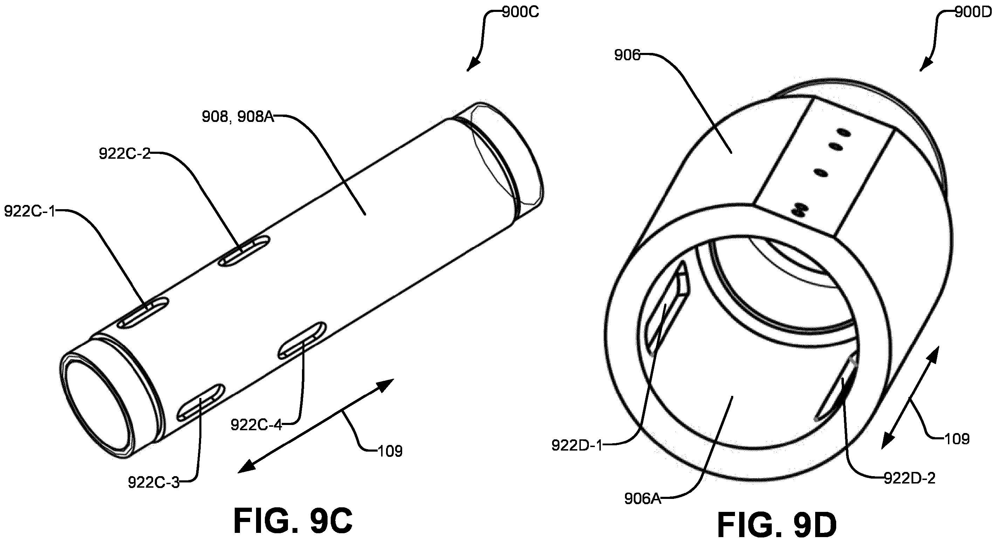

FIG. 9C is a perspective view of a fixed tube 908 according to another example embodiment. FIG. 9D is a perspective view of a moving tube 906 according to another example embodiment.

In configuration 900C, fixed tube 908 comprises an outer surface 908A that is shaped to define a plurality of grooves 922C-1 to 922C-4 (collectively grooves 922C). Rolling members 124 may be placed into grooves 922C to permit rolling members 124 to roll along longitudinal directions 109 within grooves 922C to facilitate relative movement between fixed tube 908 and a corresponding moving tube. In embodiments which incorporate the fixed tube 908 of the Figure 9C embodiment, a padding element may or may not also be used between fixed tube 908 and the corresponding moving tube. In configuration 900C, groove 922C-1 and groove 922C-2 are substantially collinear in longitudinal directions 109. Similarly, groove 922C-3 and groove 922C-4 are substantially collinear in longitudinal directions 109. However, this is not necessary. Other geometric configurations described above in relation to slots 122, 822, 922A and 902 are possible for grooves 922C.

In FIG. 9D, moving tube 906 comprises an inner surface 906A that is shaped to define grooves 922D-1 and 922D-2. Rolling members 124 may be placed into grooves 922D-1 and 922D-2 to permit rolling members 124 to roll along longitudinal directions 109 within grooves 922D-1 and 922D-2 to facilitate relative movement between moving tube 906 and a corresponding fixed tube. In embodiments which incorporate the moving tube 906 of the Figure 9D embodiment, a padding element may or may not also be used between moving tube 906 and the corresponding fixed tube. In some embodiments, a moving tube comprising grooves similar to those of FIG. 9D may be used with a fixed tube with groove similar to those of FIG. 9C. Such grooves may be located such that rolling members roll simultaneously within the grooves on the fixed and moving tubes.

Those of skill in the art will appreciate that the embodiments described herein comprises moving tubes that are one of the inner tube and the outer tube of a focusing system and fixed tubes that are the other one of the inner tube and outer tube, but that, in any embodiments, this relationship could be reversed. For example, in the embodiment of Figures 3-8, moving tube 106 is the outer tube and fixed tube 108 is the inner tube. In some embodiments, the moving tube may be the inner tube and the fixed tube may be the outer tube. In such embodiments, slotted pad 120 (or any of the other slotted and/or grooved pads described herein) and rolling members 124 (or any of the other rolling members described herein) may be disposed between the exterior surface of moving (inner) tube and the bore-defining surface of the fixed (outer) tube. Such slotted and/or grooved pads and rolling members may facilitate longitudinal movement of the moving (inner) tube relative to the fixed (outer) tube in longitudinal directions, while maintaining axial alignment of the two tubes and mitigating image drift in an analogous manner to that described herein. In such embodiments, the orthogonal biasing system may be similar to, and comprise similar components to, orthogonal biasing system 121 described above, but may be modified (e.g. by a suitable change in location) to provide force (with a directional component orthogonal to the longitudinal direction) against the inner (moving) tube. In such embodiments, the longitudinal-force-application mechanism may be similar to, and comprise similar components to, longitudinal force-application mechanism 119 described above, but may be modified (e.g. by a suitable change in location) to provide longitudinal force against the inner (moving) tube.

### Interpretation of Terms

Unless the context clearly requires otherwise, throughout the description and the claims:
"comprise", "comprising", and the like are to be construed in an inclusive sense, as opposed to an exclusive or exhaustive sense; that is to say, in the sense of "including, but not limited to";
"connected", "coupled", or any variant thereof, means any connection or coupling, either direct or indirect, between two or more elements; the coupling or connection between the elements can be physical, logical, or a combination thereof;
"herein", "above", "below", and words of similar import, when used to describe this specification, shall refer to this specification as a whole, and not to any particular portions of this specification;
"or", in reference to a list of two or more items, covers all of the following interpretations of the word: any of the items in the list, all of the items in the list, and any combination of the items in the list;
the singular forms "a", "an", and "the" also include the meaning of any appropriate plural forms. These terms ("a", "an", and "the") mean one or more unless stated otherwise;
"and/or" is used to indicate one or both stated cases may occur, for example A and/or B includes both (A and B) and (A or B);
"approximately" when applied to a numerical value means the numerical value ± 10%;
where a feature is described as being "optional" or "optionally" present or described as being present "in some embodiments" it is intended that the present disclosure encompasses embodiments where that feature is present and other embodiments where that feature is not necessarily present and other embodiments where that feature is excluded. Further, where any combination of features is described in this application this statement is intended to serve as antecedent basis for the use of exclusive terminology such as "solely," "only" and the like in relation to the combination of features as well as the use of "negative" limitation(s)" to exclude the presence of other features; and
"first" and "second" are used for descriptive purposes and cannot be understood as indicating or implying relative importance or indicating the number of indicated technical features.

Words that indicate directions such as "vertical", "transverse", "horizontal", "upward", "downward", "forward", "backward", "inward", "outward", "left", "right", "front", "back", "top", "bottom", "below", "above", "under", and the like, used in this description and any accompanying claims (where present), depend on the specific orientation of the apparatus described and illustrated. The subject matter described herein may assume various alternative orientations. Accordingly, these directional terms are not strictly defined and should not be interpreted narrowly.

Where a range for a value is stated, the stated range includes all sub-ranges of the range. It is intended that the statement of a range supports the value being at an endpoint of the range as well as at any intervening value to the tenth of the unit of the lower limit of the range, as well as any subrange or sets of sub ranges of the range unless the context clearly dictates otherwise or any portion(s) of the stated range is specifically excluded. Where the stated range includes one or both endpoints of the range, ranges excluding either or both of those included endpoints are also included in the invention.

Specific examples of systems, methods and apparatus have been described herein for purposes of illustration. These are only examples. The technology provided herein can be applied to systems other than the example systems described above. Many alterations, modifications, additions, omissions, and permutations are possible within the practice of this invention. This invention includes variations on described embodiments that would be apparent to the skilled addressee, including variations obtained by: replacing features, elements and/or acts with equivalent features, elements and/or acts; mixing and matching of features, elements and/or acts from different embodiments; combining features, elements and/or acts from embodiments as described herein with features, elements and/or acts of other technology; and/or omitting combining features, elements and/or acts from described embodiments.

As will be apparent to those of skill in the art upon reading this disclosure, each of the individual embodiments described and illustrated herein has discrete components and features which may be readily separated from or combined with the features of any other described embodiment(s) without departing from the scope of the present invention.

Various features are described herein as being present in "some embodiments". Such features are not mandatory and may not be present in all embodiments. Embodiments of the invention may include zero, any one or any combination of two or more of such features. All possible combinations of such features are contemplated by this disclosure even where such features are shown in different drawings and/or described in different sections or paragraphs. This is limited only to the extent that certain ones of such features are incompatible with other ones of such features in the sense that it would be impossible for a person of ordinary skill in the art to construct a practical embodiment that combines such incompatible features. Consequently, the description that "some embodiments" possess feature A and "some embodiments" possess feature B should be interpreted as an express indication that the inventors also contemplate embodiments which combine features A and B (unless the description states otherwise or features A and B are fundamentally incompatible).This is the case even if features A and B are illustrated in different drawings and/or mentioned in different paragraphs, sections or sentences.

It is therefore intended that the following appended claims and claims hereafter introduced are interpreted to include all such modifications, permutations, additions, omissions, and sub-combinations as may reasonably be inferred. The scope of the claims should not be limited by the preferred embodiments set forth in the examples, but should be given the broadest interpretation consistent with the description as a whole.

The embodiments of the invention described above are intended to be exemplary only. The scope of the invention is therefore intended to be limited solely by the scope of the appended claims.

## Claims

1. A focuser for an optical instrument such as a telescope, the focuser comprising:
a first tube that extends in a longitudinal direction;
a second tube that extends in the longitudinal direction, the second tube comprising a bore-defining surface shaped to define a bore that extends in the longitudinal direction wherein the first tube extends into the bore;
an optical element coupled to one of the first and second tubes for movement therewith;
a padding element located between an outer surface of the first tube and the bore-defining surface of the second tube, the padding element shaped to define a plurality of slots that penetrate the padding element;
a plurality of rolling members, with at least one rolling member located in each slot to make contact with the outer surface of the first tube and the bore-defining surface of the second tube;
wherein relative movement between the first and second tubes in the longitudinal direction is facilitated by rolling movement in the longitudinal direction of the rolling members, in their respective slots, along the outer surface of the first tube and the bore-defining surface of the second tube.

2. The focuser of claim 1 or any other claim herein wherein the slots and rolling members are shaped such that the slots confine the rolling members to movement with their respective slots.

3. The focuser of any one of claims 1 and 2 or any other claim herein where the slots extend in longitudinal directions and wherein the slots and rolling members are shaped such that the slots guide the rolling members for rolling movement that is substantially limited to the longitudinal direction within their respective slots.

4. The focuser of any one of claims 1 and 2 or any other claim herein where the slots are circularly shaped.

5. The focuser of any one of claims 1 to 4 or any other claim herein wherein the plurality slots comprise at least a first pair of slots that are spaced apart from one another in the longitudinal direction and at least a second pair of slots that are spaced apart from one another in angular directions about a longitudinally extending axis.

6. The focuser of any one of claims 1 to 5 or any other claim herein wherein the slots are at least one of located and shaped such that the rolling movement in the longitudinal direction of the rolling members, in their respective slots, along the outer surface of the first tube and the bore-defining surface of the second tube maintains the first tube and the second tube in a substantially co-axial relationship to thereby mitigate image drift.

7. The focuser of claim 5 or any other claim herein wherein the slots are at least one of located and shaped such that the rolling movement in the longitudinal direction of the rolling members, in their respective slots, along the outer surface of the first tube and the bore-defining surface of the second tube maintains the first tube and the second tube in a substantially co-axial relationship along the longitudinally extending axis to thereby mitigate image drift.

8. The focuser of any one of claims 1 to 7 or any other claim herein wherein contact between the rolling members and the outer surface of the first tube and contact between the rolling members and the bore-defining surface of the second tube maintain a space between the outer surface of the first tube and the bore-defining surface of the second tube.

9. The focuser of claim 8 or any other claim herein wherein the space between the outer surface of the first tube and the bore-defining surface of the second tube has an annular cross-sectional shape in cross-sectional planes orthogonal to the longitudinal direction.

10. The focuser of any one of claims 1 to 9 or any other claim herein wherein the rolling members comprise ball bearings.

11. The focuser of any one of claims 1 to 9 or any other claim herein wherein the rolling members comprise cylindrical rollers (e.g. wheels).

12. The focuser of any one of claims 1 to 11 or any other claim herein wherein the plurality of slots comprises at least four slots.

13. The focuser of any one of claims 1 to 12 or any other claim herein wherein the plurality of slots comprises 8 to 10 slots.

14. The focuser of any one of claims 1 to 13 or any other claim herein wherein at least some of the plurality of slots are arranged to be collinear with, and spaced apart from, one another in the longitudinal direction.

15. The focuser of any one of claims 1 to 14 or any other claim herein wherein at least two groups of slots from among the plurality of slots are arranged to be collinear with, and spaced apart from, one another in the longitudinal direction.

16. The focuser of any one of claims 1 to 15 or any other claim herein wherein at least some of the plurality of slots are arranged to be located at the same locations in the longitudinal direction and to be angularly spaced apart from one another about a longitudinally extending axis.

17. The focuser of any one of claims 1 to 16 or any other claim herein wherein at least two groups of slots from among the plurality of slots are arranged to be located at the same locations in the longitudinal direction and to be angularly spaced apart from one another about a longitudinally extending axis.

18. The focuser of any one of claims 1 to 17 or any other claim herein wherein the padding element is semi-tubularly shaped and extends in the longitudinal direction with a semi-annular cross-section in planes orthogonal to the longitudinal direction that subtends an arc less than 360°.

19. The focuser of claim 18 or any other claim herein wherein the arc is in a range of about 45°-180°.

20. The focuser of claim 19 or any other claim herein wherein the arc is in a range of about 75°-150°.

21. The focuser of any one of claims 1 to 20 or any other claim herein comprising an orthogonal biasing system operative to apply an orthogonal force against the second tube, the orthogonal force oriented to have a component orthogonal to the longitudinal direction, the orthogonal force maintaining contact between the rolling members and the outer surface of the first tube and contact between the rolling members and the bore-defining surface of the second tube and maintaining the first tube and the second tube in a substantially co-axial relationship to thereby mitigate image drift.

22. The focuser of any one of claims 1 to 20 or any other claim herein comprising an orthogonal biasing system operative to apply an orthogonal force against the first tube, the orthogonal force oriented to have a component orthogonal to the longitudinal direction, the orthogonal force maintaining contact between the rolling members and the outer surface of the first tube and contact between the rolling members and the bore-defining surface of the second tube and maintaining the first tube and the second tube in a substantially co-axial relationship to thereby mitigate image drift.

23. The focuser of any one of claims 21 to 22 or any other claim herein wherein the orthogonal biasing system comprises a biasing mechanism comprising a compressed spring and a pressure plate connected directly or indirectly, through another fixed component, to a base of the focuser.

24. The focuser of claim 23 or any other claim herein wherein the pressure plate is adjustably connected to the base to thereby control the amount of orthogonal force applied by the orthogonal biasing system.

25. The focuser of any one of claims 21 to 22 or any other claim herein wherein the orthogonal biasing system further comprises:
a friction block coupled to one of the first and second tubes, the friction block comprising a friction surface;
a focus-adjustment shaft in contact with the friction surface and supported for rotation about a focus-adjustment axis that is substantially orthogonal to the longitudinal direction;
a biasing mechanism for application of a second force which forces the focus-adjustment shaft against the friction surface and in turn creates the orthogonal force.

26. The focuser of claim 25 or any other claim herein wherein the biasing system comprises a biasing mechanism comprising a compressed spring and a pressure plate connected directly or indirectly, through another fixed component, to a base of the focuser.

27. The focuser of claim 26 or any other claim herein wherein the pressure plate is adjustably connected to the base to thereby control the amount of orthogonal force applied by the orthogonal biasing system.

28. The focuser of any one of claims 25 to 27 or any other claim herein wherein the second force is oriented in a direction that is substantially orthogonal to both the longitudinal direction and the focus-adjustment axis.

29. The focuser of claim 25 or any other claim herein wherein the second force is oriented in a direction that has a component that is orthogonal to both the longitudinal direction and the focus-adjustment axis.

30. The focuser of any one of claims 25 to 29 or any other claim herein comprising a shaft support block defining a concavity wherein the focus-adjustment shaft is supported by the shaft support block within the concavity.

31. The focuser of any one of claims 25 to 29 or any other claim herein comprising one or more pivot joints and wherein the focus-adjustment shaft is supported for rotation about the focus-adjustment axis by the one or more pivot joints.

32. The focuser of any one of claims 21 to 31 or any other claim herein wherein the orthogonal force assists with facilitating rolling movement in the longitudinal direction of the rolling members, in their respective slots, along the outer surface of the first tube and the bore-defining surface of the second tube.

33. The focuser of any one of claims 21 to 32 or any other claim herein wherein the orthogonal force assists with mitigating sliding movement of the rolling members along the outer surface of the first tube and the bore-defining surface of the second tube.

34. The focuser of any one of claims 25 to 33 or any other claim herein comprising a longitudinal force-application mechanism connected for providing the force that causes the relative movement between the first and second tubes in the longitudinal direction.

35. The focuser of claim 34 or any other claim herein wherein the longitudinal force-application mechanism comprises the friction block, the focus-adjustment shaft and the biasing mechanism.

36. A focuser for an optical instrument such as a telescope, the focuser comprising:
a first tube that extends in a longitudinal direction;
a second tube that extends in the longitudinal direction, the second tube comprising a bore-defining surface shaped to define a bore that extends in the longitudinal direction wherein the first tube extends into the bore;
an optical element coupled to one of the first and second tubes for movement therewith;
at least one of an outer surface of the first tube and the bore-defining surface of the second tube shaped to define a plurality of grooves;
a plurality of rolling members, with at least one rolling member located in each groove to make contact with the outer surface of the first tube and the bore-defining surface of the second tube;
wherein relative movement between the first and second tubes in the longitudinal direction is facilitated by rolling movement in the longitudinal direction of the rolling members, in their respective grooves, along the outer surface of the first tube and the bore-defining surface of the second tube.

37. The focuser of claim 36 or any other claim herein wherein:
the outer surface of the first tube is shaped to define a first plurality of grooves;
the bore-defining surface of the second tube is shaped to define a second plurality of grooves;
at least one rolling member is located in each of the first plurality of grooves and in each of the second plurality of grooves.

38. The focuser of any one of claims 36 to 37 or any other claim herein wherein the grooves and rolling members are shaped such that the grooves confine the rolling members to movement with their respective grooves.

39. The focuser of any one of claims 36 to 38 or any other claim herein where the grooves extend in longitudinal directions and wherein the grooves and rolling members are shaped such that the grooves guide the rolling members for rolling movement that is substantially limited to the longitudinal direction within their respective grooves.

40. The focuser of any one of claims 36 to 39 or any other claim herein wherein the plurality grooves comprise at least a first pair of grooves that are spaced apart from one another in the longitudinal direction and at least a second pair of grooves that are spaced apart from one another in angular directions about a longitudinally extending axis.

41. The focuser of any one of claims 36 to 40 or any other claim herein wherein the grooves are at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship to thereby mitigate image drift.

42. The focuser of claim 40 or any other claim herein wherein the grooves are at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship along the longitudinally extending axis to thereby mitigate image drift.

43. The focuser of any one of claims 36 to 43 or any other claim herein contact between the rolling members and the outer surface of the first tube and contact between the rolling members and the bore-defining surface of the second tube maintain a space between the outer surface of the first tube and the bore-defining surface of the second tube.

44. The focuser of claim 43 or any other claim herein wherein the space between the outer surface of the first tube and the bore-defining surface of the second tube has an annular cross-sectional shape in cross-sectional planes orthogonal to the longitudinal direction.

45. The focuser of any one of claims 36 to 44 or any other claim herein wherein the rolling members comprise ball bearings.

46. The focuser of any one of claims 36 to 44 or any other claim herein wherein the rolling members comprise cylindrical rollers (e.g. wheels).

47. The focuser of any one of claims 36 to 46 or any other claim herein comprising an orthogonal biasing system operative to apply an orthogonal force against the second tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift.

48. The focuser of any one of claims 36 to 46 or any other claim herein comprising an orthogonal biasing system operative to apply an orthogonal force against the first tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift.

49. The focuser of any one of claims 47 to 48 or any other claim herein wherein the orthogonal biasing system comprises a biasing mechanism comprising a compressed spring and a pressure plate connected directly or indirectly, through another component, to a base of the focuser.

50. The focuser of claim 49 or any other claim herein wherein the pressure plate is adjustably connected to the base to thereby control the amount of orthogonal force applied by the orthogonal biasing system.

51. The focuser of any one of claims 47 to 50 or any other claim herein wherein the orthogonal biasing system further comprises:
a friction block coupled to one of the first and second tubes, the friction block comprising a friction surface;
a focus-adjustment shaft in contact with the friction surface and supported for rotation about a focus-adjustment axis that is substantially orthogonal to the longitudinal direction;
a biasing mechanism for application of a second force which forces the focus-adjustment shaft against the friction surface and in turn creates the orthogonal force.

52. The focuser of claim 51 or any other claim herein wherein the biasing system comprises a biasing mechanism comprising a compressed spring and a pressure plate connected directly or indirectly, through another component, to a base of the focuser.

53. The focuser of claim 52 or any other claim herein wherein the pressure plate is adjustably connected to the base to thereby control the amount of orthogonal force applied by the orthogonal biasing system.

54. The focuser of any one of claims 51 to 53 or any other claim herein wherein the orthogonal force assists with maintaining contact of the rolling members with the outer surface of the first tube and the bore-defining surface of the second tube.

55. The focuser of any one of claims 51 to 54 or any other claim herein wherein the orthogonal force assists with facilitating rolling movement in the longitudinal direction of the rolling members, in their respective grooves.

56. The focuser of any one of claims 51 to 55 or any other claim herein wherein the force assists with mitigating sliding movement of the rolling members in their respective grooves.

57. A focuser for an optical instrument such as a telescope, the focuser comprising:
a first tube that extends in a longitudinal direction;
a second tube that extends in the longitudinal direction, the second tube comprising a bore-defining surface shaped to define a bore that extends in the longitudinal direction wherein the first tube extends into the bore;
an optical element coupled to one of the first and second tubes for movement therewith;
a padding element located between an outer surface of the first tube and the bore-defining surface of the second tube, the padding element shaped to define a plurality of grooves in a surface thereof;
a plurality of rolling members, with at least one rolling member located in each groove to make contact with the padding element surface and one of the outer surface of the first tube and the bore-defining surface of the second tube;
wherein relative movement between the first and second tubes in the longitudinal direction is facilitated by rolling movement in the longitudinal direction of the rolling members, in their respective grooves, along the padding element surface and the one of the outer surface of the first tube and the bore-defining surface of the second tube.

58. The focuser of claim 57 or any other claim herein wherein:
the one of the outer surface of the first tube and the bore-defining surface of the second tube is shaped to define a second plurality of grooves;
at least one rolling member is located in each of the plurality of grooves and in each of the second plurality of grooves.

59. The focuser of any one of claims 57 to 58 or any other claim herein wherein the grooves and rolling members are shaped such that the grooves confine the rolling members to movement with their respective grooves.

60. The focuser of any one of claims 57 to 59 or any other claim herein where the grooves extend in longitudinal directions and wherein the grooves and rolling members are shaped such that the grooves guide the rolling members for rolling movement that is substantially limited to the longitudinal direction within their respective grooves.

61. The focuser of any one of claims 57 to 60 or any other claim herein wherein the plurality grooves comprise at least a first pair of grooves that are spaced apart from one another in the longitudinal direction and at least a second pair of grooves that are spaced apart from one another in angular directions about a longitudinally extending axis.

62. The focuser of any one of claims 57 to 61 or any other claim herein wherein the grooves are at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship to thereby mitigate image drift.

63. The focuser of claim 61 or any other claim herein wherein the grooves are at least one of located and shaped such that the rolling movement in the longitudinal direction of the rolling members, in their respective grooves, along the outer surface of the first tube and the bore-defining surface of the second tube maintains the first tube and the second tube in a substantially co-axial relationship along the longitudinally extending axis to thereby mitigate image drift.

64. The focuser of any one of claims 57 to 63 or any other claim herein contact between the rolling members and the padding element surface and between the rolling members and the one of the outer surface of the first tube and the bore-defining surface of the second tube maintain a space between the outer surface of the first tube and the bore-defining surface of the second tube.

65. The focuser of claim 64 or any other claim herein wherein the space between the outer surface of the first tube and the bore-defining surface of the second tube has an annular cross-sectional shape in cross-sectional planes orthogonal to the longitudinal direction.

66. The focuser of any one of claims 57 to 65 or any other claim herein wherein the rolling members comprise ball bearings.

67. The focuser of any one of claims 57 to 65 or any other claim herein wherein the rolling members comprise cylindrical rollers (e.g. wheels).

68. The focuser of any one of claims 57 to 67 or any other claim herein wherein the padding element is semi-tubularly shaped and extends in the longitudinal direction with a semi-annular cross-section in planes orthogonal to the longitudinal direction that subtends an arc less than 360°.

69. The focuser of any one of claims 57 to 68 or any other claim herein comprising an orthogonal biasing system operative to apply an orthogonal force against the second tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift.

70. The focuser of any one of claims 57 to 68 or any other claim herein comprising an orthogonal biasing system operative to apply an orthogonal force against the first tube, the orthogonal force oriented to have a component orthogonal to the longitudinal direction, the orthogonal force maintaining contact between the rolling members and their respective grooves and maintaining the first tube and the second tube in a substantially co-axial relationship to thereby mitigate image drift.

71. The focuser any one of claims 69 to 70 or any other claim herein wherein the orthogonal biasing system comprises a biasing mechanism comprising a compressed spring and a pressure plate connected directly or indirectly, through another component, to a base of the focuser.

72. The focuser of claim 71 or any other claim herein wherein the pressure plate is adjustably connected to the base to thereby control the amount of orthogonal force applied by the orthogonal biasing system.

73. The focuser of any one of claims 69 to 72 or any other claim herein wherein the orthogonal biasing system further comprises:
a friction block coupled to one of the first and second tubes, the friction block comprising a friction surface;
a focus-adjustment shaft in contact with the friction surface and supported for rotation about a focus-adjustment axis that is substantially orthogonal to the longitudinal direction;
a biasing mechanism for application of a second force which forces the focus-adjustment shaft against the friction surface and in turn creates the orthogonal force.

74. The focuser of claim 73 or any other claim herein wherein the biasing system comprises a biasing mechanism comprising a compressed spring and a pressure plate connected directly or indirectly, through another component, to a base of the focuser.

75. The focuser of claim 74 or any other claim herein wherein the pressure plate is adjustably connected to the base to thereby control the amount of orthogonal force applied by the orthogonal biasing system.

76. The focuser of any one of claims 73 to 75 or any other claim herein wherein the orthogonal force assists with maintaining contact of the rolling members with the outer surface of the first tube and the bore-defining surface of the second tube.

77. The focuser of any one of claims 73 to 76 or any other claim herein wherein the orthogonal force assists with facilitating rolling movement in the longitudinal direction of the rolling members, in their respective grooves.

78. The focuser of any one of claims 73 to 77 or any other claim herein wherein the orthogonal force assists with mitigating sliding movement of the rolling members in their respective grooves.

79. A method for focusing an optical instrument such as a telescope, the method comprising:
providing a first tube that extends in a longitudinal direction;
providing a second tube that extends in the longitudinal direction, the second tube comprising a bore-defining surface shaped to define a bore that extends in the longitudinal direction wherein the first tube extends into the bore;
providing an optical element coupled to one of the first and second tubes for movement therewith;
providing a padding element located between an outer surface of the first tube and the bore-defining surface of the second tube, the padding element shaped to define a plurality of slots that penetrate the padding element;
providing a plurality of rolling members, with at least one rolling member located in each slot to make contact with the outer surface of the first tube and the bore-defining surface of the second tube;
facilitating relative movement between the first and second tubes in the longitudinal direction by rolling movement in the longitudinal direction of the rolling members, in their respective slots, along the outer surface of the first tube and the bore-defining surface of the second tube.

80. A method for focusing an optical instrument such as a telescope, the method comprising:
providing a first tube that extends in a longitudinal direction;
providing a second tube that extends in the longitudinal direction, the second tube comprising a bore-defining surface shaped to define a bore that extends in the longitudinal direction wherein the first tube extends into the bore;
providing an optical element coupled to one of the first and second tubes for movement therewith;
providing at least one of an outer surface of the first tube and the bore-defining surface of the second tube shaped to define a plurality of grooves;
providing a plurality of rolling members, with at least one rolling member located in each groove to make contact with the outer surface of the first tube and the bore-defining surface of the second tube;
facilitating relative movement between the first and second tubes in the longitudinal direction by rolling movement in the longitudinal direction of the rolling members, in their respective grooves, along the outer surface of the first tube and the bore-defining surface of the second tube.

81. A method for focusing an optical instrument such as a telescope, the method comprising:
providing a first tube that extends in a longitudinal direction;
providing a second tube that extends in the longitudinal direction, the second tube comprising a bore-defining surface shaped to define a bore that extends in the longitudinal direction wherein the first tube extends into the bore;
providing an optical element coupled to one of the first and second tubes for movement therewith;
providing a padding element located between an outer surface of the first tube and the bore-defining surface of the second tube, the padding element shaped to define a plurality of grooves in a surface thereof;
providing a plurality of rolling members, with at least one rolling member located in each groove to make contact with the padding element surface and one of the outer surface of the first tube and the bore-defining surface of the second tube;
facilitating relative movement between the first and second tubes in the longitudinal direction by rolling movement in the longitudinal direction of the rolling members, in their respective grooves, along the padding element surface and the one of the outer surface of the first tube and the bore-defining surface of the second tube.

82. Methods according to any one of claims 79 to 81 comprising method features corresponding to any of the features of claims 1 to 78.
